(19)

**Europäisches Patentamt**
**European Patent Office**
**Office européen des brevets**

(11)  **EP 4 551 867 B1**

(12)  # EUROPEAN PATENT SPECIFICATION

(45) Date of publication and mention
of the grant of the patent:
**15.04.2026  Bulletin 2026/16**

(21) Application number: **23744935.0**

(22) Date of filing: **27.06.2023**

(51) International Patent Classification (IPC):
**F23G 7/08** *(2006.01)*    **F23L 7/00** *(2006.01)*
**F23N 5/02** *(2006.01)*

(52) Cooperative Patent Classification (CPC):
**F23G 7/08; F23L 7/005; F23N 5/02;**
F23N 2005/185; F23N 2229/00; F23N 2233/02

(86) International application number:
**PCT/US2023/026336**

(87) International publication number:
**WO 2024/010719 (11.01.2024 Gazette 2024/02)**

(54) **MONITORING AND MAINTAINING FLARE TIP TEMPERATURES**

ÜBERWACHUNG UND AUFRECHTERHALTUNG DER TEMPERATUR VON FACKELSPITZEN

SURVEILLANCE ET MAINTIEN DE TEMPÉRATURES DE NEZ DE TORCHE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **07.07.2022  US 202217811219**

(43) Date of publication of application:
**14.05.2025  Bulletin 2025/20**

(73) Proprietor: **Saudi Arabian Oil Company
Dhahran 31311 (SA)**

(72) Inventors:
  • **SAFAR, Anas H.**
    **Dhahran, 31311 (SA)**
  • **ALTIJANI, Abdulaziz H.**
    **Dhahran, 31311 (SA)**
  • **AL SANAD, Abdullmajeed I.**
    **Dhahran, 31311 (SA)**

  • **ALOMAIR, Fatimah M.**
    **Dhahran, 31311 (SA)**
  • **AL-GARNI, Turki Ali**
    **Dhahran, 31311 (SA)**
  • **ALJALLAL, Mohammed A.**
    **Dhahran, 31311 (SA)**
  • **ALOUFI, Yousef D.**
    **Dhahran, 31311 (SA)**
  • **KHALDI, Muhammad M.**
    **Dhahran, 31311 (SA)**
  • **AMIN, Hasan Ali**
    **Dhahran, 31311 (SA)**

(74) Representative: **Fish & Richardson P.C.
Highlight Business Towers
Mies-van-der-Rohe-Straße 8
80807 München (DE)**

(56) References cited:
**US-A- 4 505 668        US-A1- 2017 370 579
US-A1- 2020 386 404**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## TECHNICAL FIELD

This invention relates to flare tip monitoring.

## BACKGROUND

During hydrocarbon production and processing, a flare tip is used to safely burn excess hydrocarbons during production or process irregularities. The flare tip is mounted at a sufficient height and distance to reduce radiation exposure to the workers and to reduce the likelihood of atmospheric hydrocarbon ignition as the flare tip is a potential ignition source. The flame at the flare tip burns at a temperature high enough that the flame cannot often be directly measured.

US 4,505,668 describes measurement of the amount of infrared radiation coming from the flame associated with a flare stack is utilized to manipulate the flow of steam to the flare stack so as to reduce the emission of smoke from the flare stack when a combustible waste gas containing hydrocarbons is being burned in the flare stack.

US 2020/0386404 describes monitoring a flare burner with a camera. The monitoring may indicate to operators the presence or absence of one or more of smoke, flare flame, and steam plume and record those indications or measurements.

US 2017/0370579 describes a flare combustion control that includes a sound speed measurement device for measuring sound speed in a flare vent gas, and a flare combustion controller including a memory and a processor. The processor is configured to receive the measured sound speed and determine, based on the measured sound speed, a molecular weight of the flare vent gas. The processor is further configured to determine, based on the determined molecular weight, a net heating value of the flare vent gas, and adjust the net heating value of the flare vent gas by regulating an amount of a supplemental fuel gas in the flare vent gas.

## SUMMARY

This invention describes technologies relating to monitoring and maintaining flare tip temperatures.

Claim 1 defines a method.

Aspects of the example method, which can be combined with the example method alone or in combination with other aspects, include the following.

Determining the second set of parameters includes determining the adiabatic flame temperature. The adiabatic flame temperature is determined with the following equation:

$$\mathrm{T_{ad}} = T_{\oplus} + \mathrm{LHV_{molar}} / \sum \mathrm{V_i C_{pi}}$$

where $\mathrm{T_{ad}}$ is the adiabatic flame temperature in degrees Kelvin (K), $T_{\oplus}$ is 298 K, $\mathrm{LHV_{molar}}$ is the lower heating value of a composition of the mass flow in molar basis, $\mathrm{V_i}$ are molar coefficients, and $\mathrm{C_{pi}}$ are molar thermal capacities.

Aspects of the example method, which can be combined with the example method alone or in combination with other aspects, include the following. Determining the second set of parameters includes determining the theoretical flame temperature. The theoretical flame temperature is determined by the following equation:

$$T = 60 + \left( \frac{NHV}{0.325\,(1+1+EA)(7.5\,x\,10^{-4})(NHV)} \right)$$

where T is a temperature in degrees Fahrenheit, NHV is a Net Heating Valve of hydrocarbon stream in British Thermal Units per pound of excess air, and where $EA = \frac{0.95Y}{21-Y}$ .

In the following, 1 °F = -17,22 °C and 1 BTU = 0,000293 kW. Embodiments of the example method, which can be combined with the example method alone or in combination with other aspects, include the following. A prediction of steam usage is determined. The prediction of steam usage is determined by the following equation:

$$\mathrm{W\,(steam)} = \mathrm{W}\,[\,0.68 - (10.8\,/\,\mathrm{MW})]$$

where W (steam) is a flowrate of steam in pounds per hour, W is the flowrate of the flared gas, and where MW is a molecular weight of hydrocarbon gas in the mass flow in pounds per pound-mole.

Embodiments of the example method, which can be combined with the example method alone or in combination with other aspects, include the following. Steam flow is regulated by the control signal. The control signal is determined based upon the prediction of steam usage.

Embodiments of the example method, which can be combined with the example method alone or in combination with other aspects, include the following. The actuable device is an air blower, actuation of the air blower being controlled by the control signal.

Embodiments of the example method, which can be combined with the example method alone or in combination with other aspects, include the following. Values of the first set of parameters and the second set of parameters are stored within a database.

Claim 8 defines a flare system.

Embodiments of the example flare system, which can be combined with the example flare system alone or in combination with other aspects, include the following. The actuable device includes a steam supply.

Embodiments of the example flare system, which can be combined with the example flare system alone or in combination with other aspects, include the following. The actuable device includes an air blower.

Embodiments of the example flare system, which can be combined with the example flare system alone or in combination with other aspects, include the following. Determining the second set of parameters includes determining the adiabatic flame temperature. The adiabatic flame temperature is determined with the following equation:

$$\mathrm{T_{ad}} = T_\oplus + \mathrm{LHV_{molar}} / \sum \mathrm{V_i C_{pi}}$$

where $T_{ad}$ is the adiabatic flame temperature in degrees Kelvin (K), $T_\oplus$ is 298 K, $LHV_{molar}$ is the lower heating value of a composition of the mass flow in molar basis, $V_i$ are molar coefficients, and $C_{pi}$ are molar thermal capacities.

Embodiments of the example flare system, which can be combined with the example flare system alone or in combination with other aspects, include the following. Determining the second set of parameters includes determining the theoretical flame temperature. The theoretical flame temperature is determined by the following equation:

$$T = 60 + \left( \frac{NHV}{0.325 \ (1+1+EA)(7.5 \ x \ 10^{-4})(NHV)} \right)$$

where T is a temperature in degrees Fahrenheit, NHV is a Net Heating Valve of hydrocarbon stream in British Thermal Units per pound of excess air, and where $EA = \frac{0.95Y}{21-Y}$.

Particular implementations of the subject matter described in this invention can be implemented so as to realize one or more of the following advantages. The subject matter described herein allows for flare monitoring and extension of flare service life. In addition, the subject matter described herein can help enhance combustion and smokeless operation. Such enhancement can reduce the required steam and air for the flare operation, and hence, reduce the required energy and associated $CO_2$ from the flare combustion and source of utilities (for example, steam, and air).

The details of one or more implementations of the subject matter described in this invention are set forth in the accompanying drawings and the description below. Other features, aspects, and advantages of the subject matter will become apparent from the description, the drawings, and the claims.

## BRIEF DESCRIPTION OF THE DRAWINGS

FIG. 1 is a schematic diagram of an example flare system.
FIG. 2 is a schematic diagram of an example controller that can be used with aspects of this invention.
FIG. 3 is a flowchart of an example method that can be used with aspects of this invention.

Like reference numbers and designations in the various drawings indicate like elements.

## DETAILED DESCRIPTION

Heat intensity, thermal cycling, and smoke production are all factors that impact a resulting lifespan of a flare tip. Monitoring flare tip properties during operation and actively maintaining such properties increases flare tip lifespans when compared to running a flare without monitoring.

This invention relates to such monitoring practices. For example, a flare tip temperature is monitored based on a first set of flare parameters. This first set of flare parameters is used to determine a second set of flare parameters. An actuable device is then controlled based on the first set of parameters and the second set of parameters to maintain the flare tip within a specified operating range.

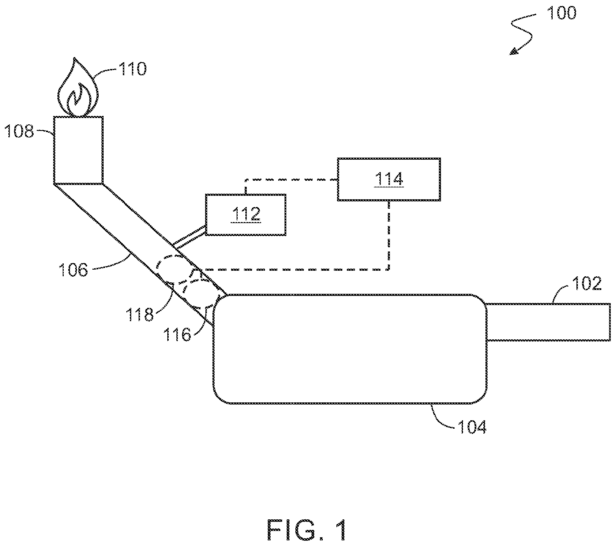

FIG. 1 is a schematic diagram of an example flare system 100. The flare system 100 includes a flare header 102 that feeds into a knock-out drum 104. The knock-out drum 104 allows liquids to drop out of the flare header 102 prior to gasses in the flare header 102 moving to the flare supply line 106. The flare supply line 106 supplies flare gas to the flare tip 108, where it is ignited and burned off with a flare flame 110. The flare tip 108 is located at a sufficient height and distance from workers to reduce the risk of burns from radiation emitted from the flare flame 110. The flare tip 108 itself is designed for a specified range of fuel consumption rates (for example, flare gas), fuel compositions, and temperatures. Exceeding these specified ranges, in some instances, shortens a lifespan of the flare tip 108.

In some implementations, the flare system 100 includes an actuable device 112 arranged and configured to add mass flow to a flare stream flowing through the flare header 102 towards the flare tip 108. The additional mass flow is used to regulate the flare flame 110 temperature, reduce smoke from the flare tip 108, or a combination of the two. Examples of such actuable devices 112 include a steam supply and an air blower. In some implementations, such actuable devices are controlled by a controller 114.

Within the flare header 102 of flare supply line 106 is a flow meter 116 that is used, in conjunction with a known composition of the flare gas, to measure or determine a mass flow rate. That is, the flow meter 116 sends a signal, or data stream, indicative of a mass flow rate. The flow meter 116 is coupled to a controller 114. In some implementations, composition of the flare gas is determined through regular testing or with an in-line gas chromatograph 118. In implementations that use an in-line gas chromatograph 118, the in-line gas chromatograph 118 sends a signal, or data stream, indicative of a mass flow composition of the flare gas.

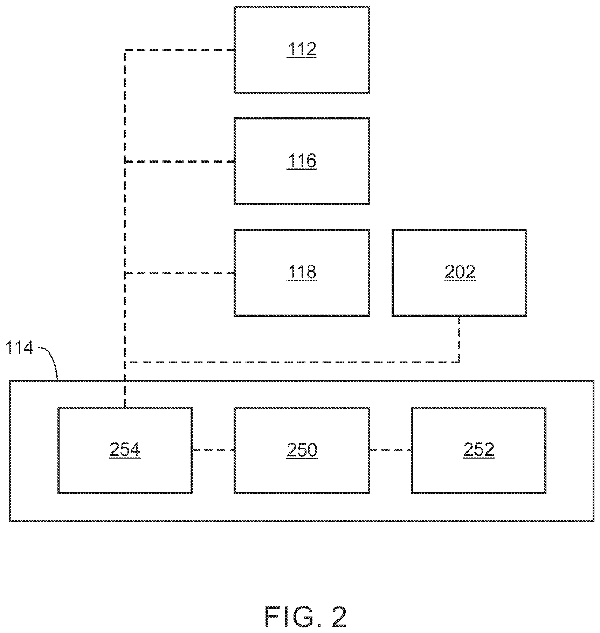

FIG. 2 is a schematic diagram of an example controller that can be used with aspects of this invention.

The controller 114 can, among other things, monitor parameters of the system and send signals to actuate and/or adjust various operating parameters of the flare system 100. As shown in FIG. 2, the controller 114, in certain instances, includes a processor 250 (e.g., implemented as one processor or multiple processors) and a memory 252 (e.g., implemented as one memory or multiple memories) containing instructions that cause the processors 250 to perform operations described herein. The processors 250 are coupled to an input/output (I/O) interface 254 for sending and receiving communications with components in the system, including, for example, sensors, such as the flow meter 116 or the gas chromatograph 118, or a remote database 202 that stores values for the first set of parameters or the second set of parameters. In certain instances, the controller 114 can additionally communicate status with and send actuation and/or control signals to one or more of the various system components (including an actuator system, such the actuable device 112) of the flare system 100, as well as other sensors (e.g., pressure sensors, temperature sensors, vibration sensors, and other types of sensors) provided in the flare system 100. In certain instances, the controller 114 can communicate status and send actuation and control signals to one or more of the components within the flare system 100 such as the actuable device 112. The communications can be hard-wired, wireless, or a combination of wired and wireless. In some implementations, controllers similar to the controller 114 can be located elsewhere, such as in a data van, elsewhere on a site or even remote from the site. In some implementations, the controller 114 can be a distributed controller with different portions located about a site or off site. For example, in certain instances, the controller 114 can be located in proximity to the components of the system 100, or it can be located in a separate control room or data van. Additional controllers can be used throughout the site as stand-alone controllers or networked controllers without departing from this invention.

The controller 114 can operate in monitoring, commanding, and using the system 100 to monitor and adjust flare tip 108 conditions. To monitor and control the system 100, the controller 114 is used in conjunction with the sensors 116 and 118. Input and output signals, including the data from the sensors, controlled and monitored by the controller 114, can be logged continuously by the controller 114.

The controller 114 can have varying levels of autonomy for controlling the system 100. For example, the controller 114 can begin sensing parameters that indicate smoke production or high temperatures at the flare tip, and an operator adjusts the actuable device 112, for example, by changing an airflow rate of a blower or a steam injection rate. Alternatively, the controller 114 can begin sensing such parameters, receive an additional input from an operator, and begin adjusting the actuable device 112 with no other input from an operator. Alternatively, the controller 114 can begin sensing the parameters and adjust the actuable device 112 with no input from an operator.

In operation, the controller 114, coupled to the actuable device 112, receives a data stream indicative of a first set of flare tip parameters, for example, a mass flow rate of the flare gas or a composition of the flare gas. The controller 114 also determines a second set of parameters based, at least in part, on the first set of flare tip parameters, for example, a flare temperature (adiabatic or theoretical). The controller 114 then sends a control signal to an actuable device 112 based on the first set of parameters and the second set of parameters. The actuable device 112 is configured to maintain or adjust at least one parameter of the first set of parameters and the second set of parameters within a specified range, for example, a flare temperature can be adjusted by changing an amount of steam or air added to the flare stream.

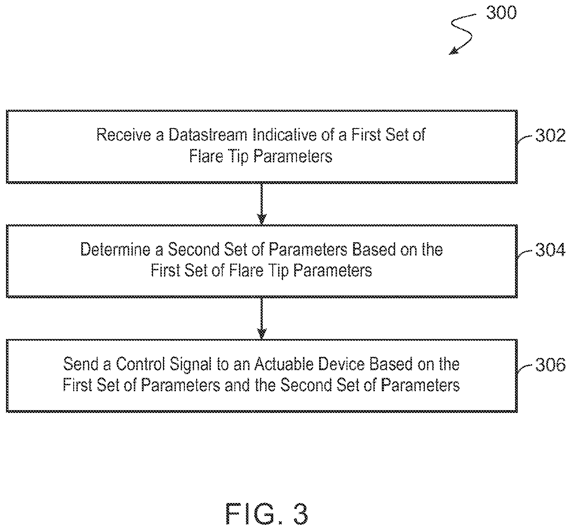

FIG. 3 is a flowchart of an example method 300 that can be used with aspects of this invention.

In some implementations, all or part of the following method steps are performed by the controller 114. At 302, a data stream indicative of a first set of flare tip parameters is received. In some implementations, the first set of parameters includes a present flare mass flow rate, a present flare mass flow composition, a specified range of fuel consumption rates (for example, flare gas), a specified range of fuel compositions, and a specified range of flare tip temperatures (adiabatic or theoretical).

At 304, a second set of parameters is determined, in part, based on the first set of flare tip parameters. In some implementations, the second set of parameters includes an adiabatic flame temperature, a theoretical flame temperature, or both. In instances where the adiabatic flame temperature is determined, the adiabatic flame temperature is determined with the following equation:

$$T_{ad} = T_{\oplus} + LHV_{molar} / \sum V_i c_{pi} \qquad EQ. (1)$$

where $T_{ad}$ is the adiabatic flame temperature in degrees Kelvin (K), $T_{\oplus}$ is 298 K, $LHV_{molar}$ is the lower heating value of a composition of the mass flow in molar basis, $V_i$ are molar coefficients, and $C_{pi}$ are molar thermal capacities. In some implementations, $LHV_{molar}$, $V_i$, and $C_{pi}$ are determined based on the composition of the mass flow.

In implementations where the theoretical flame temperature is determined, the theoretical flame temperature is determined by the following equation:

$$T = 60 + \left( \frac{NHV}{0.325\ (1+1+EA)(7.5\ x\ 10^{-4})(NIIV)} \right) \qquad EQ. (2)$$

where T is a temperature in degrees Fahrenheit, NHV is a Net Heating Valve of hydrocarbon stream in British Thermal Units per pound of excess air, and where *EA* is determined by the following equation:

$$EA = \frac{0.95Y}{21-Y} \qquad EQ. (3)$$

where Y s a dry molar percentage of $O_2$.

In some implementations, the values of the first set of parameters, the second set of parameters, or both, are stored within the database 202 or look-up table. In such implementations, the database can be located in a variety of locations, for example, locally on the memory 252 of the controller 114, remotely at a separate location, or in a separate memory located at the flare site.

At 306, a control signal is sent, for example, from the controller 114, to an actuable device 112 based on the first set of parameters and the second set of parameters. The actuable device 112 is configured to maintain or adjust (per the control signal) at least one parameter of the first set of parameters or the second set of parameters within a specified range. For example, additional steam or air can be added to the mass flow stream feeding the flare tip to adjust smoke production, flare temperature, or both.

In implementations where steam is used, steam usage is predicted with the following equation:

$$W(steam) = W\ [\ 0.68 - (10.8\ /\ MW)] \qquad EQ. (4)$$

where W is a flowrate of flare gas in pounds per hour, where W(steam) is the flowrate of steam, and where MW is a molecular weight of hydrocarbon gas in the mass flow in pounds per pound-mole. In some implementations, a flow of steam is regulated by the controller, more specifically, by the control signal sent from the controller 114 to the steam source. Alternatively, or in addition, the actuable device includes an air blower. In such implementations, a flow rate of air by the blower is regulated by the controller 114, more specifically, by the control signal sent from the controller 114 to the blower.

While this invention contains many specific implementation details, these should not be construed as limitations on the scope of what may be claimed, but rather as descriptions of features specific to particular implementations. Certain features that are described in this invention in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the implementations described above should not be understood as requiring such separation in all implementations, and it should be understood that the described components and systems can generally be integrated together in a single product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results.

**Claims**

1. A method (300) comprising:

   receiving (302) a data stream indicative of a first set of measured flare tip parameters, wherein the first set of measured flare tip parameters comprises flare mass flow rate and flare mass flow composition;
   determining (304) a second set of parameters based on the first set of measured flare tip parameters, wherein the second set of parameters comprises an adiabatic flame temperature or a theoretical flame temperature; and
   sending (306) a control signal to an actuable device based on the first set of measured flare tip parameters and the second set of parameters, the actuable device configured to maintain at least one parameter of the first set of measured flare tip parameters and the second set of parameters within a specified range.

2. The method of claim 1, wherein determining the second set of parameters comprises determining the adiabatic flame temperature, wherein the adiabatic flame temperature is determined with the following equation:

$$T_{ad} = T_{\oplus} + LHV_{molar} / \sum V_i C_{pi}$$

where $T_{ad}$ is the adiabatic flame temperature in degrees Kelvin (K), $T_{\oplus}$ is 298 K, $LHV_{molar}$ is the lower heating value of a composition of the mass flow in molar basis, $V_i$ are molar coefficients, and $C_{pi}$ are molar thermal capacities.

3. The method of claim 1, wherein determining the second set of parameters comprises determining the theoretical flame temperature, wherein the theoretical flame temperature is determined by the following equation:

$$T = 60 + \left(\frac{NHV}{0.325\,(1+1+EA)(7.5 \times 10^{-4})(NHV)}\right)$$

where T is a temperature in degrees Fahrenheit, NHV is a Net Heating Valve of hydrocarbon stream in British Thermal Units per pound of excess air, and where $EA = \frac{0.95Y}{21-Y}$ .

4. The method of claim 1, further comprising determining a prediction of steam usage, wherein the prediction of steam usage is determined by the following equation:

$$W\,(steam) = W\,[\,0.68 - (10.8 / MW)]$$

where W is a flowrate of steam in pounds per hour, and where MW is a molecular weight of hydrocarbon gas in the mass flow in pounds per pound-mole.

5. The method of claim 4, wherein steam flow is regulated by the control signal, the control signal being determined based upon the prediction of steam usage.

6. The method of claim 1, wherein the actuable device is an air blower, actuation of the air blower being controlled by the control signal.

7. The method of claim 1, further comprising storing values of the first set of measured flare tip parameters and the second set of parameters within a database.

8.  A flare system comprising:

    a flare tip (108);
    a flare header (102) directing flare gas towards the flare tip;
    an actuable device (112) arranged and configured to add mass flow to a flare stream flowing through the flare header (102) towards the flare tip (108); and
    a controller (114) coupled to the actuable device, the controller configured to:

       receive (302) a data stream indicative of a first set of measured flare tip parameters, wherein the first set of measured flare tip parameters comprises a flare mass flow rate and a flare mass flow composition;
       determine (304) a second set of parameters based on the first set of measured flare tip parameters, wherein the second set of parameters comprises an adiabatic flame temperature or a theoretical flame temperature; and
       send (306) a control signal to an actuable device based on the first set of measured flare tip parameters and the second set of parameters, the actuable device configured to maintain at least one parameter of the first set of measured flare tip parameters and the second set of parameters within a specified range.

9.  The flare system of claim 8, wherein the actuable device (112) comprises a steam supply.

10. The flare system of claim 8, wherein the actuable device (112) comprises an air blower.

11. The flare system of claim 8, wherein determining the second set of parameters comprises determining the adiabatic flame temperature, wherein the adiabatic flame temperature is determined with the following equation:

$$\mathrm{T_{ad}} = T_{\oplus} + \mathrm{LHV}_{\mathrm{molar}} / \sum \mathrm{V_i c_{pi}}$$

    where $T_{ad}$ is the adiabatic flame temperature in degrees Kelvin (K), $T_{\oplus}$ is 298 K, $LHV_{molar}$ is the lower heating value of a composition of the mass flow in molar basis, $V_i$ are molar coefficients, and $C_{pi}$ are molar thermal capacities.

12. The flare system of claim 8, wherein determining the second set of parameters comprises determining the theoretical flame temperature, wherein the theoretical flame temperature is determined by the following equation:

$$T = 60 + \left( \frac{NHV}{0.325 \, (1+1+EA)(7.5 \, x \, 10^{-4})(NHV)} \right)$$

    where T is a temperature in degrees Fahrenheit, NHV is a Net Heating Valve of hydrocarbon stream in British Thermal Units per pound of excess air, and where $EA = \frac{0.95Y}{21-Y}$ .

13. The flare system of any one of claims 8-12, wherein:

    flare mass flow rate is measured using a flow meter (116); and
    flare mass flow composition is measured through regular testing or with an in-line gas chromatograph (118).


**Patentansprüche**

1.  Verfahren (300), umfassend:

    Empfangen (302) eines Datenstroms, der einen ersten Satz gemessener Fackelspitzenparameter angibt, wobei der erste Satz gemessener Fackelspitzenparameter Fackelmassendurchfluss und Fackelmassenflusszusammensetzung umfasst;
    Bestimmen (304) eines zweiten Satzes Parameter basierend auf dem ersten Satz gemessener Flammenspitzenparameter, wobei der zweite Satz Parameter eine adiabatische Flammentemperatur oder eine theoretische Flammentemperatur umfasst; und
    Senden (306) eines Steuersignals an eine betätigbare Vorrichtung basierend auf dem ersten Satz gemessener Fackelspitzenparameter und dem zweiten Satz Parameter, wobei die betätigbare Vorrichtung dazu ausgelegt ist, mindestens einen Parameter des ersten Satzes gemessener Fackelspitzenparameter und des zweiten Satzes Parameter innerhalb eines spezifizierten Bereichs zu halten.

2. Verfahren nach Anspruch 1, wobei das Bestimmen des zweiten Satzes Parameter das Bestimmen der adiabatischen Flammentemperatur umfasst, wobei die adiabatische Flammentemperatur mit der folgenden Gleichung bestimmt wird:

$$T_{ad} = T_{\oplus} + LHV_{molar}/\Sigma v_i c_{pi}$$

wobei $T_{ad}$ die adiabatische Flammentemperatur in Grad Kelvin (K) ist, $T_{\oplus}$ 298 K ist, $LHV_{molar}$ der Nettoheizwert einer Zusammensetzung des Massenflusses auf molarer Basis ist, $V_i$ Momentenbeiwerte sind und $C_{pi}$ Molwärmekapazitäten sind.

3. Verfahren nach Anspruch 1, wobei das Bestimmen des zweiten Satzes Parameter das Bestimmen der theoretischen Flammentemperatur umfasst, wobei die theoretische Flammentemperatur mit der folgenden Gleichung bestimmt wird:

$$T = 60 + \left(\frac{NHV}{0{,}325(1 + 1 + EA)(7{,}5 \times 10^{-4})(NHV)}\right)$$

wobei T eine Temperatur in Grad Fahrenheit ist, NHV ein Nettoheizwert eines Kohlenwasserstoffstroms in British thermal unit (BTU) pro Pfund überschüssiger Luft ist und wobei $EA = \frac{0{,}95Y}{21 - Y}$ .

4. Verfahren nach Anspruch 1, ferner umfassend Bestimmen einer Vorhersage des Dampfverbrauchs, wobei die Vorhersage des Dampfverbrauchs mit der folgenden Gleichung bestimmt wird:

$$W \ (DAMPF) \ = \ W \ [0{,}68 - (10{,}8/MW)]$$

wobei W der Durchfluss von Dampf in Pfund pro Stunde ist und wobei MW das Molekulargewicht von Kohlenwasserstoffgas im Massenfluss in Pfund pro Pfund-Mol ist.

5. Verfahren nach Anspruch 4, wobei der Dampffluss durch das Steuersignal geregelt wird, wobei das Steuersignal basierend auf der Vorhersage des Dampfverbrauchs bestimmt wird.

6. Verfahren nach Anspruch 1, wobei die betätigbare Vorrichtung ein Luftgebläse ist, wobei die Betätigung des Luftgebläses durch das Steuersignal gesteuert wird.

7. Verfahren nach Anspruch 1, das ferner das Speichern von Werten des ersten Satzes gemessener Fackelspitzenparameter und des zweiten Satzes Parameter innerhalb einer Datenbank umfasst.

8. Fackelsystem, umfassend:

eine Fackelspitze (108);
einen Fackelkopf (102), der Fackelgas in Richtung der Fackelspitze leitet;
eine betätigbare Vorrichtung (112), die dazu angeordnet und ausgelegt ist, einen Massenfluss zu einem Fackelstrom hinzuzufügen, der durch den Fackelkopf (102) zur Fackelspitze (108) fließt; und
eine Steuerung (114), die mit der betätigbaren Vorrichtung gekoppelt ist, wobei die Steuerung zu Folgendem ausgelegt ist:

Empfangen (302) eines Datenstroms, der einen ersten Satz gemessener Fackelspitzenparameter angibt, wobei der erste Satz gemessener Fackelspitzenparameter einen Fackelmassendurchfluss und eine Fackelmassenflusszusammensetzung umfasst;
Bestimmen (304) eines zweiten Satzes Parameter basierend auf dem ersten Satz gemessener Flammenspitzenparameter, wobei der zweite Satz Parameter eine adiabatische Flammentemperatur oder eine theoretische Flammentemperatur umfasst; und

Senden (306) eines Steuersignals an eine betätigbare Vorrichtung basierend auf dem ersten Satz gemessener Flammenspitzenparameter und dem zweiten Satz Parameter, wobei die betätigbare Vorrichtung dazu ausgelegt ist, mindestens einen Parameter des ersten Satzes gemessener Flammenspitzenparameter und des zweiten Satzes Parameter innerhalb eines spezifizierten Bereichs zu halten.

9. Fackelsystem nach Anspruch 8, wobei die betätigbare Vorrichtung (112) eine Dampfzufuhr umfasst.

10. Fackelsystem nach Anspruch 8, wobei die betätigbare Vorrichtung (112) ein Luftgebläse umfasst.

11. Fackelsystem nach Anspruch 8, wobei das Bestimmen des zweiten Satzes Parameter das Bestimmen der adiabatischen Flammentemperatur umfasst, wobei die adiabatische Flammentemperatur mit der folgenden Gleichung bestimmt wird:

$$T_{ad}=T_{\oplus}+LHV_{molar}/\Sigma V_i C_{pi}$$

wobei $T_{ad}$ die adiabatische Flammentemperatur in Grad Kelvin (K) ist, $T_{\oplus}$ 298 K ist, $LHV_{molar}$ der Nettoheizwert einer Zusammensetzung des Massenflusses auf molarer Basis ist, $V_i$ Momentenbeiwerte sind und $C_{pi}$ Molwärmekapazitäten sind.

12. Fackelsystem nach Anspruch 8, wobei das Bestimmen des zweiten Satzes Parameter das Bestimmen der theoretischen Flammentemperatur umfasst, wobei die theoretische Flammentemperatur mit der folgenden Gleichung bestimmt wird:

$$T = 60 + \left(\frac{NHV}{0{,}325(1 + 1 + EA)(7{,}5 \text{ x } 10^{-4})(NHV)}\right)$$

wobei T eine Temperatur in Grad Fahrenheit ist, NHV ein Nettoheizwert eines Kohlenwasserstoffstroms in British thermal unit (BTU) pro Pfund überschüssiger Luft ist und wobei $EA = \frac{0{,}95Y}{21-Y}$

13. Fackelsystem nach einem der Ansprüche 8-12, wobei:

der Fackelmassendurchfluss mit einem Durchflussmesser (116) gemessen wird und
die Fackelmassenflusszusammensetzung durch regelmäßige Tests oder mit einem Inline-Gaschromatografen (118) gemessen wird.

## Revendications

1. Procédé (300) comprenant :

la réception (302) d'un flux de données indiquant un premier ensemble de paramètres de nez de torche mesurés, le premier ensemble de paramètres de nez de torche mesurés comprenant un débit massique de torche et une composition de débit massique de torche ;
la détermination (304) d'un second ensemble de paramètres sur la base du premier ensemble de paramètres de nez de torche mesurés, le second ensemble de paramètres comprenant une température de flamme adiabatique ou une température de flamme théorique ; et
l'envoi (306) d'un signal de commande à un dispositif actionnable sur la base du premier ensemble de paramètres de nez de torche mesurés et du second ensemble de paramètres, le dispositif actionnable étant conçu pour maintenir au moins un paramètre du premier ensemble de paramètres de nez de torche mesurés et du second ensemble de paramètres dans une plage spécifiée.

2. Procédé selon la revendication 1, la détermination du second ensemble de paramètres comprenant la détermination de la température de flamme adiabatique, la température de flamme adiabatique étant déterminée avec l'équation suivante :

$$T_{ad} = T\oplus + LHV_{molar}/\Sigma v_i c_{pi}$$

où $T_{ad}$ est la température de flamme adiabatique en degrés Kelvin (K), $T_\oplus$ est 298 K, $LHV_{molar}$ est le pouvoir calorifique inférieur d'une composition du débit massique sur une base molaire, $V_i$ est un coefficient molaire et $C_{pi}$ est la capacité thermique molaire.

3. Procédé selon la revendication 1, la détermination du second ensemble de paramètres comprenant la détermination de la température de flamme théorique, la température de flamme théorique étant déterminée par l'équation suivante :

$$T = 60 + \left(\frac{NHV}{0{,}325(1 + 1 + EA)(7{,}5 \text{ x } 10^{-4})(NHV)}\right)$$

où T est la température en degrés Fahrenheit, NHV est le pouvoir calorifique inférieur du flux d'hydrocarbures en unités thermiques britanniques par livre d'air excédentaire, et où $EA = \frac{0{,}95Y}{21-Y}$ .

4. Procédé selon la revendication 1, comprenant en outre la détermination d'une prédiction de l'utilisation de vapeur, la prédiction de l'utilisation de vapeur étant déterminée par l'équation suivante :

$$W \text{ (vapeur)} = W [0{,}68 - (10{,}8/MW)]$$

où W est le débit de vapeur en livres par heure, et où MW est le poids moléculaire du gaz hydrocarboné dans le débit massique en livres par livre-mole.

5. Procédé selon la revendication 4, l'écoulement de vapeur étant régulé par le signal de commande, le signal de commande étant déterminé sur la base de la prédiction de l'utilisation de vapeur.

6. Procédé selon la revendication 1, le dispositif actionnable étant une soufflante d'air, l'actionnement de la soufflante d'air étant commandé par le signal de commande.

7. Procédé selon la revendication 1, comprenant en outre le stockage de valeurs du premier ensemble de paramètres de nez de torche mesurés et du second ensemble de paramètres dans une base de données.

8. Système de torche comprenant :

un nez de torche (108) ;
un collecteur de torche (102) dirigeant le gaz de torche vers le nez de torche ;
un dispositif actionnable (112) agencé et conçu pour ajouter un débit massique à un flux de torche s'écoulant à travers le collecteur de torche (102) vers le nez de torche (108) ; et
un dispositif de commande (114) accouplé au dispositif actionnable, le dispositif de commande étant conçu pour :

recevoir (302) un flux de données indiquant un premier ensemble de paramètres de nez de torche mesurés, le premier ensemble de paramètres de nez de torche mesurés comprenant un débit massique de torche et une composition de débit massique de torche ;
déterminer (304) un second ensemble de paramètres sur la base du premier ensemble de paramètres de nez de torche mesurés, le second ensemble de paramètres comprenant une température de flamme adiabatique ou une température de flamme théorique ; et
envoyer (306) un signal de commande à un dispositif actionnable sur la base du premier ensemble de paramètres de nez de torche mesurés et du second ensemble de paramètres, le dispositif actionnable étant conçu pour maintenir au moins un paramètre du premier ensemble de paramètres de nez de torche mesurés et du second ensemble de paramètres dans une plage spécifiée.

9. Système de torche selon la revendication 8, le dispositif actionnable (112) comprenant une alimentation en vapeur.

10. Système de torche selon la revendication 8, le dispositif actionnable (112) comprenant une soufflante d'air.

11. Système de torche selon la revendication 8, la détermination du second ensemble de paramètres comprenant la détermination de la température de flamme adiabatique, la température de flamme adiabatique étant déterminée avec l'équation suivante :

$$T_{ad} = T_{\oplus} + LHV_{molar}/\Sigma v_i c_{pi}$$

où $T_{ad}$ est la température de flamme adiabatique en degrés Kelvin (K), $T_{\oplus}$ est 298 K, $LHV_{molar}$ est le pouvoir calorifique inférieur d'une composition du débit massique sur une base molaire, $V_i$ est un coefficient molaire et $C_{pi}$ est la capacité thermique molaire.

12. Système de torche selon la revendication 8, la détermination du second ensemble de paramètres comprenant la détermination de la température de flamme théorique, la température de flamme théorique étant déterminée par l'équation suivante :

$$T = 60 + \left(\frac{NHV}{0{,}325(1 + 1 + EA)(7{,}5 \text{ x } 10^{-4})(NHV)}\right)$$

où T est la température en degrés Fahrenheit, NHV est le pouvoir calorifique inférieur du flux d'hydrocarbures en unités thermiques britanniques par livre d'air excédentaire, et où $EA = \frac{0{,}95Y}{21-Y}$ .

13. Système de torche selon l'une quelconque des revendications 8 à 12,

le débit massique de torche étant mesuré à l'aide d'un débitmètre (116) ; et
la composition du débit massique de torche étant mesurée par des essais réguliers ou à l'aide d'un chromatographe en phase gazeuse en ligne (118).

FIG. 1

FIG. 2

300

| Receive a Datastream Indicative of a First Set of Flare Tip Parameters | 302 |

↓

| Determine a Second Set of Parameters Based on the First Set of Flare Tip Parameters | 304 |

↓

| Send a Control Signal to an Actuable Device Based on the First Set of Parameters and the Second Set of Parameters | 306 |

FIG. 3

**EP 4 551 867 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4505668 A
- US 20200386404 A
- US 20170370579 A